# EUROPEAN PATENT APPLICATION

(11) **EP 4 776 124 A1**
(43) Date of publication of application: **15.07.2026**
(21) Application number: 25382010.4
(22) Date of filing: 09.01.2025
(51) Int. Cl.: G06F 9/30

(54) **PERFORMING REGISTER-MEMORY OPERATIONS**

(71) Applicant: Semidynamics Technology Services, S.L., 08021 Barcelona (ES)
(72) Inventor: ESPASA SANS, Roger, 08021 BARCELONA (ES); MARCUELLO PASCUAL, Pedro, 08020 BARCELONA (ES); MORENO VEGA, Alberto, 08014 BARCELONA (ES); SANS I PRATS, Josep, 08038 BARCELONA (ES); POMATA, Sebastiano, 08023 BARCELONA (ES)
(74) Representative: ZBM Patents - Zea, Barlocci & Markvardsen

(57) **Abstract**

Methods are provided of performing register-memory operations in a computer system including a processor with vector-registers, a memory, a cache with cache line-size and a bus with bus-width. These methods comprise: receiving a vector store instruction to transfer from vector-registers to memory a vector of elements, each element having an element length, ELEN; partitioning the vector store instruction into vector-region store instructions each defining a vector-region to be stored, each vector-region having a region length, RLEN, greater than the ELEN and a memory length, MLEN, equal to the cache line-size or the bus-width; buffering the vector-region store instructions so that each remains buffered until conditions enabling its execution are fulfilled; and performing, for each of the vector-region store instructions once released from the buffering, transfer from vector-registers to memory of the vector-region defined in/by the vector-region store instruction. Systems and computer programs suitable for performing said methods are also provided.

## Description

This disclosure relates to methods of performing or controlling register-memory operations such as, e.g., loads and stores, and to computer programs and systems suitable to perform such methods.

### BACKGROUND

Processors (e.g., digital microprocessors) are often challenged by the complexities of accessing memory for read and write operations in an efficient manner. To overcome this barrier, some computer architectures introduced the concept of vector operations that leverage the so-called SIMD parallelism paradigm (Single Instruction, Multiple Data). This model allows performing a single operation on bigger chunks of data compared to traditional scalar architectures, thereby gaining performance at the cost of bigger circuit logic and area occupation of the (micro) processor.

For example, in processors according to RISC-V architecture with its instruction set specification and related Vector extension, two large families of instructions for vectorised memory access are defined: vector load and vector store operations. Other architectures such as, e.g., x86, ARM, MIPS, etc. also contemplate or support such a kind of vector-based operations. Vector loads are in charge of transferring data from memory (or memory hierarchy including caches and main memory) to (micro) processor's internal registers in order to enable data computation. Vector stores are usually executed after calculations have been performed in the processor to transfer data from internal (micro) processor's registers to memory (or memory hierarchy).

Some (micro) processors are known using a technique denominated Buffering, which is based on keeping on hold load and store instructions until they become eligible for execution. This buffering may be essential to, e.g., promote consistency and integrity from process and data point of view in the processor. Since stores modify data in memory and loads transfer data from memory to processor, store/load instructions cannot be allowed to perform their action until all prior exceptions and branch conditions have been resolved, in such a way that it is ensured that the store/load instruction can be performed. For example, if a load is instructed involving a memory address that is also involved by a store that is waiting for execution, the load must be kept on hold until the store has been performed in order to ensure consistency and integrity from process and data perspective.

Taking the above into account, designers usually face two undesirable options in the presence of, e.g., a vector store instruction and, in some cases, its buffering to make the vector store instruction wait for conditions enabling its execution. First option: on encountering a vector store instruction, the pipeline stalls waiting for all prior instructions to be completed to subsequently execute the vector store without its buffering. This option results in frequent pipeline lock-ups, with potentially considerable loss in performance. Second option: breaking down of the vector store instruction into multiple scalar stores, one for each element of the vector to be stored (i.e., one scalar store per iteration of a loop defining the vector store). This second option has the advantage of allowing the buffering, as a vector store is broken into a collection of related-but-independent scalar stores. However, it still may have a downside of "flooding" the store buffer with many individual scalar stores. When the store buffer becomes full, the pipeline still needs to lock-up and wait until this situation of fullness is cleared, hence still causing performance losses.

It is thus an object of the present disclosure to provide new methods, systems and computer programs aimed at improving current ways of performing register-memory operations such as stores and loads.

### SUMMARY

In a first aspect, methods are provided of performing or controlling register-memory operations in a computer system including a processor with a vector register file, a memory, a cache having a cache line size and a bus having a bus width. These methods (also denominated register-memory methods herein) comprise receiving a vector store instruction or command instructing transfer of a vector of elements from the vector register file to the memory, each of said elements to be stored having an element length (ELEN). Register-memory methods further comprise partitioning the vector store instruction into vector-region store instructions, each of the vector-region store instructions defining a vector-region of elements to be stored, each of the vector-regions having a region length (RLEN) which is greater than the ELEN and greater than a memory length (MLEN) which is the cache line size or the bus width. Register-memory methods still further comprise buffering the vector-region store instructions so that each of them remains buffered until conditions enabling its execution are fulfilled, and performing, for each of the vector-region store instructions, once released from the buffering, transfer from the vector register file to the memory of the RLEN-sized vector-region of elements defined in/by the vector-region store instruction.

Conditions enabling execution of the vector-region store instructions (or, in general, register-memory operations) may include, e.g., architectural conditions and/or pipeline conditions whose fulfilling ensures consistency and integrity from data and process perspective in the processor and memory. This matter is not a main point nor a central aspect of the present disclosure and, furthermore, it is well known what said enabling conditions may be and how they may be implemented in the technical field at hand. Hence, no details thereon are provided herein.

These register-memory methods permit performing (or controlling the performance of) register-memory operations more efficiently in comparison to prior art methods aimed at same or similar purpose. A key aspect of the present innovative solution resides in the partitioning of the vector store instruction into RLEN-sized vector-region store instructions, in such a manner that the RLEN-sized vector-regions defined by the vector-region store instructions conform the whole vector of elements defined by the vector store instruction. In other words, the vector of elements is split into disjoint RLEN-sized vector-regions each of which is to be stored (from vector registers to memory) via corresponding vector-region store instruction, so that the storing of the whole vector of elements is performed with workload distribution among several vector-region store instructions. The condition regarding RLEN greater than ELEN and MLEN especially provides a good balance between pipeline fluidity and buffer occupancy in the processor. With this inventive approach, the vector of elements may thus be stored faster in the suggested "broken up" manner because proper balance between pipeline fluidity and buffer occupancy is achieved and, therefore, processor lock-up due to pipeline stall and/or buffer saturation is significantly attenuated. Considering that VLEN is the length of the (whole) vector of elements to be stored, the purposed transition from single VLEN to several RLENs may be herein denominated vector compression in the sense that VLEN is someway compressed into RLEN chunks (i.e., vector is resized from higher length to lower lengths).

In some examples, the performing of the transfer from the vector register file to the memory of each vector-region of elements defined in/by corresponding vector-region store instruction may comprise splitting the RLEN-sized vector-region of elements into MLEN-sized blocks of elements, and transferring, from the vector register file to the memory, each of the MLEN-sized blocks into which the RLEN-sized vector-region of elements has been broken up. Taking into account that the vector of elements to be stored has been previously compressed from VLEN to RLEN, said compression may be reversed or readjusted just before the transfer of the vector-regions to optimize their conveying from vector registers to memory. In particular, it has been experimentally proven that decompression of each of the vector-regions from RLEN to MLEN may optimize such a vector-region transfer. The choice of whether MLEN equal to the cache line size or to the bus width may depend on the particular technical features of the processor. If it is known or has been proven that particularities of the processor make processor-to-memory transfers more efficient using data chunks/blocks sized with cache line length, MLEN may be equal to the cache line length or, if efficiency of transfers results better using data chunks/blocks sized with bus width, MLEN may be equal to the bus width.

According to implementations, register-memory methods may yet further comprise receiving a vector load instruction and verifying whether load-store conflict may arise due to said vector load to be executed. The vector load instruction may instruct transfer of a vector of elements from the memory to the vector register file. Said vector of elements to be loaded may be structured in (or composed by) ELEN- or MLEN-sized blocks of elements. The verifying of load-store conflict may include checking, for each of the ELEN- or MLEN-sized blocks (in which the vector of elements to be loaded is structured), whether some memory address overlap exists between the ELEN- or MLEN-sized block and some RLEN-sized vector-region defined in/by a vector-region store instruction still buffered (i.e., waiting for execution). In the case of overlap, it is determined that load-store conflict exists. Otherwise (no overlap), it is determined that no load-store conflict exists. If there is load-store conflict, the conflicting ELEN- or MLEN-sized block may be kept on hold for transfer (e.g., buffered) until there is no load-store conflict. If there is no load-store conflict, the non-conflicting ELEN- or MLEN-sized block may be released from buffering (if needed) and transferred from the memory to the vector register file.

As commented above, the vector of elements to be loaded may be made up of ELEN-sized blocks of elements or MLEN-sized blocks of elements. A gather operation refers to an access pattern where data elements are collected (or loaded) from non-contiguous memory locations and consolidated into a single register or vector. In such gathers, ELEN-sized blocks may be the structural unit making up the vector of elements to be loaded. In other cases (elements from contiguous memory locations), MLEN-sized blocks may be the structural unit making up the vector of elements to be loaded.

In some implementations, register-memory methods may furthermore comprise receiving a scalar load instruction and validating whether load-store interference may arise due to said scalar load. The scalar load instruction may instruct transfer of a scalar from the memory to a scalar register file in the processor. Said scalar to be loaded may have a scalar length (SLEN). The validating may include checking whether some memory address overlap exists between the SLEN-sized scalar to be loaded and some RLEN-sized vector-region defined in/by a vector-region store instruction still buffered (i.e., waiting for execution). If overlap is detected, it is determined that load-store interference exists. Otherwise (no overlap), it is determined that no load-store interference exists. In the case of load-store interference, the interfering SLEN-sized scalar may be kept on hold for transfer (e.g., buffered) until there is no load-store interference. In the case of no load-store interference, the non-interfering SLEN-sized scalar may be transferred from the memory to the scalar register file.

Store instructions may have different parameters required to perform the store. One or more of said parameters may indicate memory locations where data to be transferred (from processor internal registers to memory) must be stored. Said memory location parameter(s) may include or refer to destination or target memory addresses where data from processor internal registers are to be stored into memory. This store-related principle regards both vector stores and scalar stores. Load instructions may also have memory location parameters, but in this case indicating origin or source memory addresses from where, in the memory, the data elements (to be loaded) must be transferred to processor internal registers. This load-related fundamental applies to both vector loads and scalar loads. Destination/target memory addresses in store instructions and origin/source memory addresses in load instructions may be used to implement the aforementioned detection of memory address overlaps or, in other words, load-store conflicts and interferences.

In examples of register-memory methods, the RLEN may be a multiple of the MLEN and/or equal to a virtual memory page size predefined in an operating system controlling (or managing) the computer system. As described in other parts of the disclosure, MLEN may be equal to cache line size or bus width depending on particularities of the processor. Regarding RLEN, it may be chosen to be a multiple of the MLEN, or equal to virtual memory page size, etc. provided that greater than ELEN and MLEN, depending on singularities of the processor and potentially other components in the computer system influencing its performing.

In a further aspect, computer programs are provided comprising program instructions for causing a computing system to perform any of the register-memory methods disclosed herein. Said computer programs (also denominated register-memory computer programs herein) may be embodied on a storage medium and/or carried on a carrier signal. Register-memory computer programs are suitable for performing register-memory methods such as those described in other parts of the disclosure. Hence, aspects of said register-memory methods such as, e.g., functional, structural, advantageous considerations, may be similarly attributable to register-memory computer programs.

In a still further aspect, systems are provided for performing or controlling register-memory operations in a computer system including a processor with a vector register file, a memory, a cache having a cache line size and a bus having a bus width. Such systems (also denominated register-memory systems herein) comprise a receiver module, a partitioner module, a buffer module and a transfer module. The receiver module is configured to receive a vector store instruction or command instructing transfer of a vector of elements from the vector register file to the memory, each of said elements to be stored having an element length (ELEN). The partitioner module is configured to partition the vector store instruction into vector-region store instructions, each of the vector-region store instructions defining a vector-region of elements to be stored, each of the vector-regions having a region length (RLEN) which is greater than the ELEN and greater than a memory length (MLEN) which is the cache line size or the bus width. The buffer module is configured to buffer the vector-region store instructions so that each of them remains buffered until conditions enabling its execution are fulfilled. The transfer module is configured to perform, for each of the vector-region store instructions, once released from the buffering, transfer from the vector register file to the memory of the RLEN-sized vector-region of elements defined in/by the vector-region store instruction.

According to some implementations, the processor may have an architecture according to RISC-V standards, or x86 standards, or ARM standards, or MIPS standards, etc. Indeed, register-memory methods according to present disclosure may be implemented in the context of many different processor architectures. Analogously, register-memory systems and/or computer programs according to present disclosure may be included in processors or computer systems according to many different architectures such as the aforementioned RISC-V, x86, ARM, MIPS, etc.

In a yet further aspect, computing systems are provided comprising a processor with a vector register file, a memory, a cache having a cache line size, a bus having a bus width, and any of register-memory systems or computer programs according to present disclosure (or a combination thereof) embodied in the computing system.

### BRIEF DESCRIPTION OF THE DRAWINGS

Non-limiting examples of present disclosure will be described in the following, with reference to the appended drawings, in which:
Figure 1 is a block diagram schematically illustrating systems for performing or controlling register-memory operations according to examples.
Figure 2 is a flow chart schematically illustrating methods of performing or controlling register-memory operations according to examples.

### DETAILED DESCRIPTION OF EXAMPLES

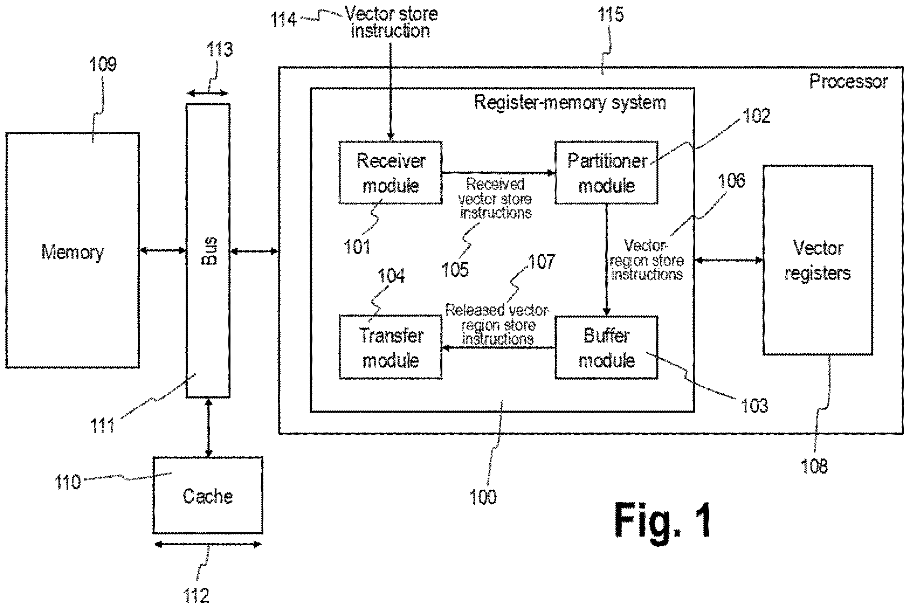

Figure 1 is a block diagram schematically illustrating systems 100 for performing or controlling register-memory operations according to examples, in a computer system including a processor 115 with a vector register file 108, a memory 109, a cache 110 having a cache line size 112 and a bus 111 having a bus width 113. These register-memory systems 100 may comprise a receiver module 101, a partitioner module 102, a buffer module 103 and a transfer module 104. The processor 115 may have an architecture according to RISC-V standards, even though other processor architectures are possible such as, e.g., x86, ARM, MIPS, etc. It is noted that this illustration is schematic and, therefore, only elements that are relevant for the present disclosure are represented therein. For example, processor 115 has, of course, many more elements than the ones depicted with the aim of providing a clear description of the subject-matter to which the present disclosure relates.

The receiver module 101 may be configured to receive a vector store instruction or command 114 instructing transfer of a vector of elements from the vector register file 108 to the memory 109, each of said elements to be stored having an element length (ELEN). The partitioner module 102 may be configured to partition the vector store instruction 105 into vector-region store instructions 106, each of the vector-region store instructions 106 defining a vector-region of elements to be stored, each of the vector-regions having a region length (RLEN) greater than the ELEN and greater than a memory length (MLEN) equal to the cache line size 112 or the bus width 113. The vector store instruction 114 and its related vector to be stored thus result, once partitioned, with a RLEN-sized block granularity. The RLEN may be a multiple of the MLEN, and/or may be equal to a virtual memory page size (pre)defined in an operating system managing or controlling the computer system.

The vector store instruction or command 114 may have parameters including one or more of: starting memory address (typically encoded in a control register in the processor 115), source vector register(s), number of elements to be stored into memory from the source vector register(s), stride between elements to be written into memory, size of each individual element to be stored (ELEN), etc. Each of the vector-region store instructions 106 may have same or similar parameters as the ones of the vector store instruction 114, but with values restricted to the RLEN-sized vector-region of elements to be stored as instructed by its related vector-region store instruction. Some of the parameters of the vector store instruction 114 and corresponding vector-region store instructions 106 may thus denote destination/target memory addresses where data elements from vector register(s) are to be stored.

The buffer module 103 may be configured to buffer the vector-region store instructions 106 so that each of them remains buffered until (e.g., architectural and/or pipeline) conditions enabling its execution are fulfilled. The transfer module 104 may be configured to perform, for each of the vector-region store instructions 107 once/when released from the buffering, transfer from the vector register file 108 to the memory 109 of the RLEN-sized vector-region of elements defined in/by the (released) vector-region store instruction 107.

The transfer from the vector registers 108 to the memory 109 of the RLEN-sized vector-region of elements defined in/by the (released) vector-region store instruction 107 may be performed by first splitting (by, e.g., the partitioner module 102 which may hence be further configured to perform this function) the RLEN-sized vector-region of elements into MLEN-sized blocks of elements and, then, transferring from the vector registers 108 to the memory 109 each of the MLEN-sized blocks of elements into which the RLEN-sized vector-region of elements has been split. The vector-region store instruction 107 or, in particular, its related vector-region to be transferred thus result, once split, with a MLEN-sized block granularity. This manner of transferring the vector-regions of elements with previous resize from RLEN to MLENs may optimize the whole transmission from efficiency perspective.

The register-memory system 100 may be further configured to receive (by, e.g., the receiver module 101 which may hence be further configured to perform this function) a vector load instruction or command instructing transfer of a vector of elements from the memory 109 to the vector registers 108, and to verify whether some load-store conflict may occur as a consequence of the vector load to be executed. The vector of elements to be loaded may be structured in (or made up of) ELEN- or MLEN-sized blocks of elements. The verifying of whether load-store conflict is to occur may include, e.g., checking, for each of the ELEN- or MLEN-sized blocks (in which the vector of elements to be loaded is structured) whether there is some memory address overlap between the ELEN- or MLEN-sized block of elements to be loaded and some RLEN-sized vector-region of elements to be stored defined in/by a vector-region store instruction still buffered (i.e., waiting for execution). In the case of overlap, it may be concluded that there is load-store conflict and, otherwise (no overlap), it may be determined that no load-store conflict exists. In the case of load-store conflict, the conflicting ELEN- or MLEN-sized block of elements to be loaded may thus be kept on hold for transfer (e.g., buffered by the buffer module 103 which may hence be further configured to perform this function) until there is no load-store conflict. Otherwise (no load-store conflict), the non-conflicting ELEN- or MLEN-sized block of elements to be loaded may be transferred (by, e.g., the transfer module 104 which may hence be further configured to perform this function) from the memory 109 to the vector registers 108.

The vector load instruction may have parameters including one or more of: starting memory address (typically encoded in a control register in the processor 115), destination vector register(s), number of elements to be loaded from memory into the destination vector register(s), stride between elements located in memory, size of each individual element to be loaded (ELEN), etc. Some of the parameters of the vector load instruction may thus denote origin/source memory addresses from where, in the memory 109, the elements (to be loaded) must be transferred to the destination vector register(s). Load-store conflicts may be detected depending on destination/target memory addresses related to (or derivable from) vector-region store instructions 106 still buffered and origin/source memory addresses related to (or derivable from) the vector load instruction.

In an example, if an ELEN- or MLEN-sized block of elements to be loaded involves or affects memory addresses A1 - A10 (as source addresses) and a RLEN-sized vector-region of elements to be stored defined in/by a still buffered vector-region store instruction involves or affects memory addresses A5 - A20 (as target addresses), it may be determined that there is overlap and, therefore, load-store conflict between them concerning memory addresses A5 - A10. In this case, the conflicting ELEN- or MLEN-sized block of elements to be loaded may thus be kept on hold for transfer (e.g., buffered by the buffer module 103 which may hence be further configured to perform this function) until there is no load-store conflict. In another example, if an ELEN- or MLEN-sized block of elements to be loaded involves or affects memory addresses A1 - A10 (as source addresses) and a RLEN-sized vector-region of elements to be stored defined in/by a still buffered vector-region store instruction involves or affects memory addresses A20 - A35 (as target addresses), it may be determined that there is no overlap and, therefore, no load-store conflict between them. In this case, the non-conflicting ELEN- or MLEN-sized block of elements to be loaded may thus be transferred (by, e.g., the transfer module 104 which may hence be further configured to perform this function) from the memory 109 to corresponding vector register(s) 108. The register-memory system 100 may be furthermore configured to receive (by, e.g., the receiver module 101 which may hence be further configured to perform this function) a scalar load instruction or command instructing transfer of a scalar from the memory 109 to a scalar register file in the processor 115, and to find out whether some load-store interference may appear due to the scalar load to be executed. This scalar to be loaded may have a scalar length (SLEN). The finding out of whether load-store interference is to occur may include, e.g., checking whether there is some memory address overlap between the SLEN-sized scalar to be loaded and some RLEN-sized vector-region of elements to be stored defined in/by a vector-region store instruction still buffered (i.e., waiting for execution). If overlap is found, it may be derived that load-store interference exists. Otherwise (no overlap), it may be inferred that there is no load-store interference. In the case of load-store interference, the interfering SLEN-sized scalar to be loaded may thus be kept on hold for transfer (e.g., buffered by the buffer module 103 which may hence be further configured to perform this function) until there is no load-store interference. On the contrary (no load-store interference), the non-interfering SLEN-sized scalar to be loaded may be transferred (by, e.g., the transfer module 104 which may hence be further configured to perform this function) from the memory 109 to the scalar register file.

The scalar load instruction may have parameters similar to the ones of the aforementioned vector load instruction but, in this case, regarding scalar-related conditions (instead of vector-related conditions) needed to perform the scalar load. Some of the parameters of the scalar load instruction may thus denote origin/source memory address(es) from where, in the memory 109, the scalar (to be loaded) must be transferred to destination scalar register. Load-store interferences may be detected depending on destination/target memory addresses related to (or derivable from) vector-region store instructions 106 still buffered and origin/source memory address(es) related to (or derivable from) the scalar load instruction.

In an example, if a SLEN-sized block including the scalar to be loaded involves or affects memory address A5 (as source address) and a RLEN-sized vector-region of elements to be stored defined in/by a still buffered vector-region store instruction involves or affects memory addresses A1 - A10 (as target addresses), it may be determined that there is overlap and, therefore, load-store interference between them concerning memory address A5. In this case, the interfering SLEN-sized block including the scalar to be loaded may thus be kept on hold for transfer (e.g., buffered by the buffer module 103 which may hence be further configured to perform this function) until there is no load-store interference. In another example, if a SLEN-sized block including the scalar to be loaded involves or affects memory address A5 (as source address) and a RLEN-sized vector-region of elements to be stored defined in/by a still buffered vector-region store instruction involves or affects memory addresses A10 - A25 (as target addresses), it may be determined that there is no overlap and, therefore, no load-store interference between them. In this case, the non-interfering SLEN-sized block including the scalar to be loaded may thus be transferred (by, e.g., the transfer module 104 which may hence be further configured to perform this function) from the memory 109 to corresponding vector register(s) 108.

Execution of the vector store instruction or command 114 may be triggered, and thus received by the receiver module 101 to perform the vector store, in response to a call to said instruction 114 programmed in an application program that is being executed in/by the computer system including the processor 115, memory 109, etc. Therefore, this call in the application program may cause execution of a register-memory computer program implementing a register-memory method according to present disclosure.

Prior to said call, the application program may have generated necessary execution pre-conditions enabling the performing of the vector store instruction 114. Generation of said execution pre-conditions may include, e.g., providing to pertinent control register (in the processor 115) the starting memory address (possible parameter of the vector store instruction 114 as explained somewhere herein). Other measures may be adopted or performed by the (running) application program, but this matter is well known by the skilled person and, therefore, no further details are provided herein. Once these execution pre-conditions have been created by the running application program, the call to the vector store instruction 114 may be triggered for it to perform the instructed vector store. This call may be programmed in the application program with, e.g., proper opcode and parameters fully consistent with the previously generated execution pre-conditions. The application program may be further programmed to receive an indicator or value denoting (successful or erroneous) completion or non-completion of the vector store instructed by the vector store instruction 114. The application program may be furthermore programmed to behave in one or another manner depending on said received indicator or value denoting how the execution of the vector store instruction 114 has terminated.

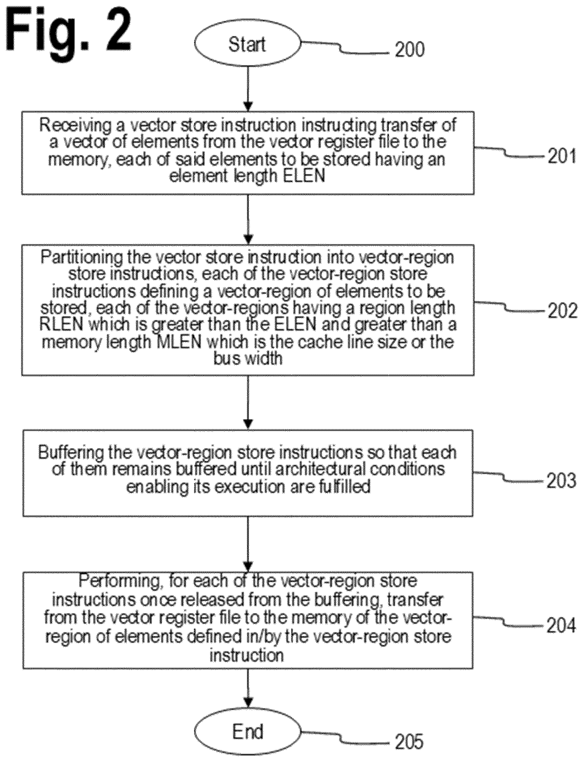

Figure 2 is a flow chart schematically illustrating methods of performing or controlling register-memory operations according to examples. Since such register-memory methods are performable at/by register-memory systems according to Figure 1, number references from said Figure 1 may be reused in following description of Figure 2. Same or similar functional and operational principles and aspects as those explained with reference to Figure 1 may thus be attributable to register-memory methods according to Figure 2 with a difference residing in that Figure 1 represents such principles and aspects from (register-memory) system perspective, whereas Figure 2 represents them from (register-memory) method or process flow perspective. Figure 2 illustrates method steps or actions logically connected with arrows denoting an execution succession thereof from (register-memory) method/process flow point of view. Such execution successions illustrated in Figure 2 follow particular orders of execution, respectively, but other logical orders of execution are possible whenever satisfaction of pre- and post-conditions of each involved method step/action are respected.

As shown in Figure 2, register-memory methods may be initiated (e.g., at block 200) in response to, e.g., a call invoking a vector store instruction included in an application program that is being executed in/by the processor 115. Considerations regarding vector store instruction and application program set out previously with respect to Figure 1 are also of application to this description of Figure 2.

Register-memory methods may include (e.g., at block 201) receiving a vector store instruction or command 114 instructing transfer of a vector of elements from the vector register file 108 to the memory 109, each of said elements to be stored having an element length (ELEN). This receiving functionality implementable at/by, e.g., method-block 201 may be performed by, e.g., the receiver module 101 previously described with reference to Figure 1. Functional details and considerations explained about said module 101 may thus be similarly attributed to method block 201.

Register-memory methods may further include (e.g., at block 202) partitioning the vector store instruction 105 into vector-region store instructions 106, each of them defining a vector-region of elements to be stored, each of said vector-regions having a region length (RLEN) greater than the ELEN and greater than a memory length (MLEN) corresponding to the cache line size 112 or the bus width 113. This partitioning functionality implementable at/by, e.g., method-block 202 may be performed by, e.g., the partitioner module 102 previously described with reference to Figure 1. Functional details and considerations explained about said module 102 may thus be similarly attributed to method block 202.

Register-memory methods may still further include (e.g., at block 203) buffering the vector-region store instructions 106 so that each of them remains buffered until (e.g., architectural and/or pipeline) conditions enabling its execution are fulfilled. This buffering functionality implementable at/by, e.g., method-block 203 may be performed by, e.g., the buffer module 103 previously described with reference to Figure 1. Functional details and considerations explained about said module 103 may thus be similarly attributed to method block 203.

Register-memory methods may yet further include (e.g., at block 204) performing, for each of the vector-region store instructions 107, once released from the buffering, transfer from the vector register file 108 to the memory 109 of the RLEN-sized vector-region of elements defined in/by the (released) vector-region store instruction 107. This transfer functionality implementable at/by, e.g., method-block 204 may be performed by, e.g., the transfer module 104 previously described with reference to Figure 1. Functional details and considerations explained about said module 104 may thus be similarly attributed to method block 204.

Register-memory methods may terminate (e.g., at block 205) by, e.g., returning to the application program that has called the vector store instruction 114 an indicator or value denoting (successful or erroneous) completion or non-completion of the transfer from vector registers 108 to memory 109 of the vector of elements defined or referred to by the vector store instruction or command 114.

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding register-memory methods/systems proposed herein, and/or to other components that may be local or remote to one another. Additionally, the modules may be moved from one device and added to another device, and/or may be included in both devices, associated to corresponding register-memory methods/systems proposed herein. Any software implementations may be tangibly embodied in one or more storage media such as, e.g., a memory device, a compact disk (CD), a digital versatile disk (DVD), or other devices that may store computer code.

The register-memory systems according to present disclosure may be implemented by computing means, electronic means or a combination thereof. The computing means may be a set of instructions (e.g., a computer program) and then the register-memory systems may use a memory and a processor, embodying said set of instructions stored in the memory and executable by the processor. These instructions may comprise functionality or functionalities to execute corresponding register-memory methods such as the ones described in other parts of the disclosure.

In case the register-memory systems are implemented only by electronic means, a controller of the register-memory system may be, for example, a CPLD (Complex Programmable Logic Device), an FPGA (Field Programmable Gate Array) or an ASIC (Application-Specific Integrated Circuit).

In case the register-memory systems are a combination of electronic and computing means, the computing means may be a set of instructions (e.g., a computer program) and the electronic means may be any electronic circuit capable of executing said instructions to cause implementation or performing of corresponding method-steps of the register-memory methods proposed herein, such as those described in other parts of the disclosure.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing register-memory methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, register-memory methods proposed herein.

Although only a number of examples have been disclosed herein, other alternatives, modifications, uses and/or equivalents thereof are possible. Furthermore, all possible combinations of the described examples are also covered. Thus, the scope of present disclosure should not be limited by particular examples but it should be determined only by a fair reading of the claims that follow.

## Claims

1. Method of performing or controlling register-memory operations in a computer system including a processor with a vector register file, a memory, a cache having a cache line size and a bus having a bus width, the method comprising:
receiving a vector store instruction instructing transfer of a vector of elements from the vector register file to the memory, each of said elements to be stored having an element length, ELEN;
partitioning the vector store instruction into vector-region store instructions, each of the vector-region store instructions defining a vector-region of elements to be stored, each of the vector-regions having a region length, RLEN, which is greater than the ELEN and greater than a memory length, MLEN, which is the cache line size or the bus width;
buffering the vector-region store instructions so that each of them remains buffered until conditions enabling its execution are fulfilled; and
performing, for each of the vector-region store instructions, once released from the buffering, transfer from the vector register file to the memory of the RLEN-sized vector-region of elements defined in/by the vector-region store instruction.

2. Method of performing or controlling register-memory operations according to claim 1, wherein the performing of the transfer from the vector register file to the memory of the RLEN-sized vector-region of elements defined in/by the vector-region store instruction comprises:
splitting the RLEN-sized vector-region of elements into MLEN-sized blocks of elements; and
transferring, from the vector register file to the memory, each of the MLEN-sized blocks into which the RLEN-sized vector-region of elements has been split.

3. Method of performing or controlling register-memory operations according to any of claims 1 or 2, further comprising:
receiving a vector load instruction instructing transfer of a vector of elements from the memory to the vector register file, said vector of elements to be loaded being structured in ELEN- or MLEN-sized blocks of elements; and
checking, for each of the ELEN- or MLEN-sized blocks in which the vector of elements to be loaded is structured, whether there is some memory address overlap between the ELEN- or MLEN-sized block and some RLEN-sized vector-region defined in/by a vector-region store instruction still buffered, in which case load-store conflict is detected and, otherwise, no load-store conflict is detected.

4. Method of performing or controlling register-memory operations according to claim 3, wherein
if load-store conflict is detected, the conflicting ELEN- or MLEN-sized block is buffered or kept on hold for transfer until there is no load-store conflict.

5. Method of performing or controlling register-memory operations according to any of claims 3 or 4, wherein
if no load-store conflict is detected, the non-conflicting ELEN- or MLEN-sized block is transferred from the memory to the vector register file.

6. Method of performing or controlling register-memory operations according to any of claims 1 to 5, further comprising:
receiving a scalar load instruction instructing transfer of a scalar from the memory to a scalar register file in the processor, said scalar to be loaded having a scalar length, SLEN; and
checking whether there is some memory address overlap between the SLEN-sized scalar to be loaded and some RLEN-sized vector-region defined in/by a vector-region store instruction still buffered, in which case load-store interference is detected and, otherwise, no load-store interference is detected.

7. Method of performing or controlling register-memory operations according to claim 6, wherein
if load-store interference is detected, the interfering SLEN-sized scalar is buffered or kept on hold for transfer until there is no load-store interference.

8. Method of performing or controlling register-memory operations according to any of claims 6 or 7, wherein
if no load-store interference is detected, the non-interfering SLEN-sized scalar is transferred from the memory to the scalar register file.

9. Method of performing or controlling register-memory operations according to any of claims 1 to 8, wherein the RLEN is a multiple of the MLEN.

10. Method of performing or controlling register-memory operations according to any of claims 1 to 9, wherein the RLEN is equal to a virtual memory page size predefined in an operating system managing or controlling the computer system.

11. Method of performing or controlling register-memory operations according to any of claims 1 to 10, wherein the processor has an architecture according to RISC-V standards.

12. Computer program comprising computer program code means adapted to perform all the steps of the method of performing or controlling register-memory operations according to any of claims 1 to 11 when said program is run on a computing system.

13. Computer program according to claim 12, embodied on a computer readable medium.

14. System for performing or controlling register-memory operations in a computer system including a processor with a vector register file, a memory, a cache having a cache line size and a bus having a bus width, the system comprising:
a receiver module configured to receive a vector store instruction instructing transfer of a vector of elements from the vector register file to the memory, each of said elements to be stored having an element length, ELEN;
a partitioner module configured to partition the vector store instruction into vector-region store instructions, each of the vector-region store instructions defining a vector-region of elements to be stored, each of the vector-regions having a region length, RLEN, which is greater than the ELEN and greaterthan a memory length, MLEN, which is the cache line size or the bus width;
a buffer module configured to buffer the vector-region store instructions so that each of them remains buffered until conditions enabling its execution are fulfilled; and
a transfer module configured to perform, for each of the vector-region store instructions, once released from the buffering, transfer from the vector register file to the memory of the RLEN-sized vector-region of elements defined in/by the vector-region store instruction.

15. Computing system including a processor with a vector register file, a memory, a cache having a cache line size, a bus having a bus width, and a system for performing or controlling register-memory operations according to claim 14.
